# FASCICULE DE BREVET EUROPEEN

(11) **EP 1 107 625 B1**
(45) Date de publication et mention de la délivrance du brevet: **06.04.2005**
(21) Numéro de dépôt: 00403072.2
(22) Date de dépôt: 06.11.2000
(51) Int. Cl.: H04Q 7/32

(54) **Dialogue entre deux contrôleurs notamment dans un terminal radiotéléphonique bimode DECT/GSM**
Dialog zwischen zwei Steuereinheiten, insbesondere in einem Dual-Mode DECT/GSM Mobilfunk-Endgerät
Dialogue between two controllers, particularly in a dual mode DECT/GSM radiotelephone terminal

(30) Priorité: 01.12.1999 FR 9915232
(43) Date de publication de la demande: 13.06.2001
(73) Titulaire: Sagem SA, 75512 Paris (FR)
(72) Inventeur: Lejay, Laurent, 95600 Eaubonne (FR)
(74) Mandataire: Cabinet Martinet & Lapoux

(56) Documents cités:
- EP-A- 0 858 237
- WO-A-98/09462
- WO-A-98/27766
- DE-A- 4 118 993
- DE-A- 19 914 254
- GSM TECHNICAL SPECIFICATION 01 Juillet 1997, pages 1-5 - 7,9, XP002064640

## Description

La présente invention concerne un dialogue entre deux contrôleurs. Un premier contrôleur est maître et transmet des premières unités de données de protocole à un deuxième contrôleur qui est esclave du premier contrôleur et répond aux premières unités par des deuxièmes unités de données de protocole. Le deuxième contrôleur, l'esclave, ne peut transmettre des données qu'en réponse à une commande du premier contrôleur.

Un tel dialogue est par exemple instauré entre le microcontrôleur dans une carte à puce et le microcontrôleur d'un moyen d'accueil de la carte. Par exemple, la carte à puce est une carte SIM (Subscriber Identity Module) et le moyen d'accueil est un terminal radiotéléphonique mobile. Les microcontrôleurs dans la carte SIM et le terminal dialoguent selon un protocole d'échange de données asynchrone connu sous les termes "SIM application Toolkit" qui permet à la carte de déclencher des actions dans le terminal. Ce protocole est décrit dans le document "Digital cellular telecommunications system (Phase 2+); Specification of the SIM Application Toolkit for the Subscriber Identity Module - Mobile Equipment (SIM-ME) interface (GSM 11.14 version 5.4.0).

Toutefois, le microcontrôleur dans le terminal est encore le maître du rythme des échanges. Pour que le microcontrôleur dans la carte puisse entreprendre une action, le terminal interroge périodiquement (polling en anglais) la carte SIM pro-active au moyen d'une commande STATUS afin notamment d'inviter la carte à enclencher une action.

La vitesse de réaction du microcontrôleur dans la carte dépend alors de la périodicité d'interrogation du microcontrôleur dans le terminal et ainsi ne permet pas au microcontrôleur de la carte de lancer une action dès que celle-ci est nécessaire.

L'objectif principal de l'invention est de fournir un procédé de dialogue entre deux contrôleurs de type maître et esclave tels que définis ci-dessus ne présentant pas l'inconvénient précédent.

A cette fin, un procédé de dialogue selon lequel un premier contrôleur transmet des premières unités de données auxquelles un deuxième contrôleur répond par des deuxièmes unités de données, est caractérisé par un premier changement d'état logique d'un premier fil entre les contrôleurs effectué par le deuxième contrôleur lorsque celui-ci décide d'envoyer une commande au premier contrôleur, une transmission d'une première unité de données prédéterminée par le premier contrôleur à la suite du premier changement d'état, et un deuxième changement d'état logique du premier fil opposé au premier changement et la transmission d'une deuxième unité de données effectués par le deuxième contrôleur pour répondre à la première unité de données prédéterminée.

Le premier changement d'état logique du premier fil, ou de tout autre moyen de liaison entre les deux contrôleurs, est pris à l'initiative du deuxième contrôleur, le contrôleur qui était "esclave", peut ainsi réagir immédiatement, par exemple à un événement extérieur, sans attendre l'envoi périodique d'une première unité de données particulière par le premier contrôleur. L'événement extérieur peut être un appel entrant du deuxième contrôleur lorsque celui-ci est dédié à la gestion de communications téléphoniques et souhaite utiliser immédiatement des moyens périphériques gérés par le premier contrôleur.

L'unité de données prédéterminée succédant au premier changement d'état logique diffère d'une commande STATUS classique et est, selon une réalisation préférée, une enveloppe contenant un champ de données vide.

En outre, selon l'invention, une commande pro-active peut être lancée depuis le deuxième contrôleur avant qu'une session de séquences commande-réponse soit terminée, ce qui est impossible dans une session entre une carte SIM et un terminal selon la technique antérieure. Ainsi selon l'invention, toute première unité de données transmise par le premier contrôleur entre des premier et deuxième changements d'état du premier fil est ignorée par le deuxième contrôleur lorsque celui-ci décide d'envoyer une commande au premier contrôleur alors qu'une session de dialogue est en cours entre les contrôleurs.

La présente invention poursuit également un deuxième objectif pour diminuer la consommation électrique du deuxième contrôleur qui, selon la technique antérieure, est actif même entre deux interrogations successives par le premier contrôleur.

Pour atteindre ce deuxième objectif, l'invention prévoit un maintien d'un premier état logique d'un deuxième fil entre les contrôleurs par le premier contrôleur seulement pendant chaque échange de première et deuxième unités de données, afin que le deuxième contrôleur ainsi sélectionné par le premier contrôleur soit actif seulement pendant l'échange. Par contre, le deuxième contrôleur est en veille et donc fonctionne avec une consommation électrique réduite lorsque le deuxième fil est à un deuxième état logique entre deux échanges successifs de première et deuxième unités de données, c'est-à-dire de séquences commande-réponse.

L'invention prévoit également un maintien d'un troisième fil entre les contrôleurs à un premier état logique par le premier contrôleur pour mettre hors tension le deuxième contrôleur à la suite d'une première unité de données prédéterminée établie par le premier contrôleur, et/ou en réponse à une deuxième unité de données prédéterminée établie par le deuxième contrôleur. Par exemple, le deuxième contrôleur est mis hors tension lorsque le premier contrôleur est à un premier mode de fonctionnement exclusif de toute relation avec le deuxième contrôleur. Cette caractéristique diminue encore la consommation électrique du deuxième contrôleur pendant des périodes de fonctionnement du premier contrôleur pour lesquelles le premier contrôleur n'a aucune utilité.

Selon une réalisation préférée de l'invention, les premier et deuxièmes contrôleurs sont compris dans un terminal radiotéléphonique et dédiés respectivement à des premier et deuxième modes de communication afin que le premier contrôleur mette à disposition du deuxième contrôleur une interface homme-machine. L'interface homme-machine peut comprendre notamment un afficheur et un clavier utilisé quel que soit le mode de communication sélectionné, par exemple le mode GSM auquel est dédié le premier contrôleur et le mode DECT auquel est dédié le deuxième contrôleur, ou inversement.

De préférence, le terminal radiotéléphonique de l'invention est aussi compact que ceux selon la technique antérieure. A cette fin, le premier contrôleur et l'interface homme-machine sont contenus dans un premier bloc, et le deuxième contrôleur et un moyen d'alimentation électrique des contrôleurs sont contenus dans un deuxième bloc emboîtable dans le premier bloc.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique d'un terminal radiotéléphonique bimode muni de deux microcontrôleurs mettant en oeuvre le procédé de dialogue selon l'invention, l'environnement du terminal étant également montré ;
- la figure 2 est un diagramme de première et deuxièmes unités de données de protocole échangées entre les deux microcontrôleurs ;
- les figures 3A, 3B et 3C montrent trois diagrammes principaux de dialogue entre les deux microcontrôleurs ;
- la figure 4 est un diagramme de dialogue entre les microcontrôleurs afin que le deuxième microcontrôleur transmette une commande pro-active au premier microcontrôleur ;
- la figure 5 un diagramme de dialogue entre les microcontrôleurs lorsque le premier microcontrôleur est en attente d'une réponse du deuxième microcontrôleur ;
- la figure 6 est un diagramme d'un signal de sélection de deuxième microcontrôleur en correspondance à une séquence commande-réponse entre les microcontrôleurs ;
- la figure 7 est un diagramme montrant le réveil du deuxième microcontrôleur lorsque celui-ci doit transmettre des données ou une commande pro-active au premier microcontrôleur ou interroger celui-ci ;
- la figure 8 montre l'interruption d'une session de dialogue entre les microcontrôleurs lorsque le deuxième microcontrôleur souhaite signaler un appel ; et
- les figures 9 et 10 sont des diagrammes de dialogue entre les microcontrôleurs respectivement selon deux variantes lorsque le premier microcontrôleur met hors tension le deuxième microcontrôleur.

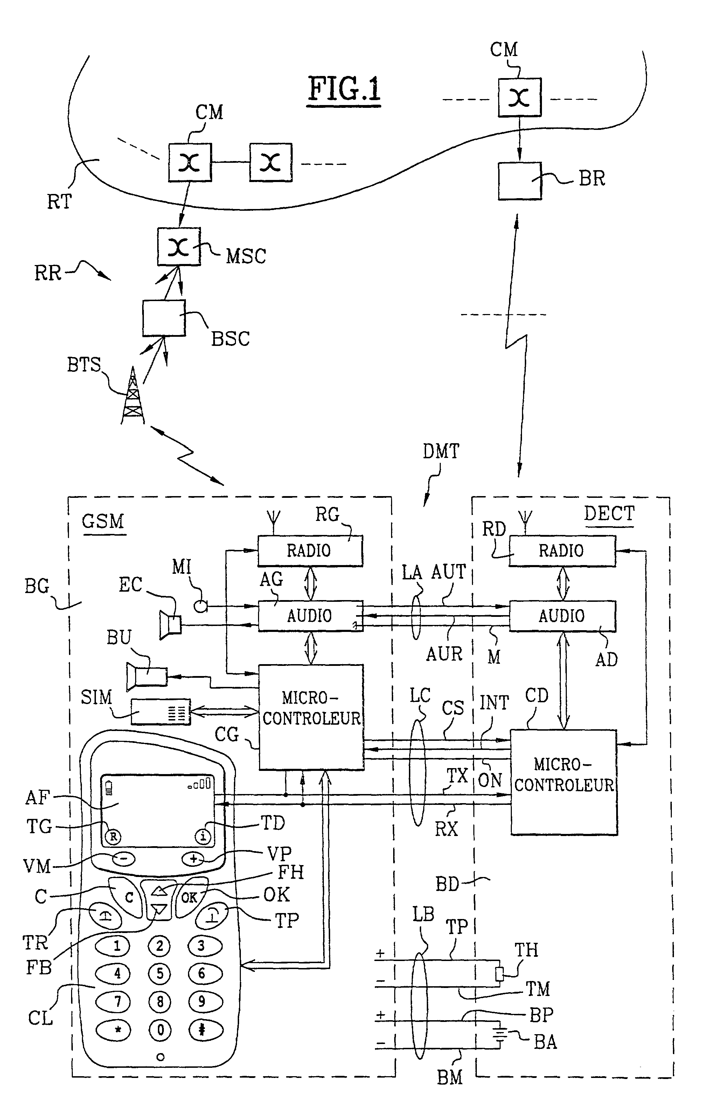

Un terminal radiotéléphonique **mobile bimode** DMT (Dual Mode Terminal) est capable de communiquer en un premier mode de communication dit GSM (Global System for Mobile communication) ou dans un deuxième mode de communication dit DECT (Digital Enhanced Cordless Telecommunications). Dans la description ci-après, le premier mode GSM désigne de manière indifférente une communication avec un réseau de radiotéléphonie RR de type GSM 900 ou de type DCS 1800 (Digital Cellular System) dont le sous-réseau fixe est schématisé dans la figure 1 par une station de base BTS, un contrôleur de station de base BSC et un commutateur de service mobile MSC raccordé à un commutateur CM d'un réseau de téléphonie RT, par exemple le réseau radiotéléphonique public. Lorsque le terminal DMT communique en mode DECT, il échange des signaux à travers une borne radio BR qui est reliée à un commutateur CM d'un réseau téléphonique fixe RT tel que le réseau téléphonique public ou un réseau numérique à intégration de services RNIS à travers une ligne téléphonique d'abonné et éventuellement à travers un commutateur privé PABX. La borne BR dessert notamment d'autres terminaux téléphoniques portables fonctionnant au moins en mode DECT.

Comme montré en détail à la figure 1, le terminal radiotéléphonique mobile bimode DMT comprend une première partie BG principalement dédiée à des communications selon le premier mode GSM et une deuxième partie BD dédiée à des communications selon le deuxième mode DECT. Bien que ces deux parties BG et BD puissent être contenues dans un même boîtier de terminal, ces parties selon la réalisation illustrée à la figure 1 sont complètement distinctes et séparées et contenues respectivement dans un boîtier appelé ci-après bloc GSM BG et un boîtier appelé ci-après bloc DECT BD reliés entre eux par une triple liaison à contacts électriques LC-LA-LB. Selon cette réalisation préférée, le bloc BD dédié aux communications DECT est contenu dans le bloc de batterie BA amovible d'un terminal radiotéléphonique classique GSM dont le boîtier avec le clavier constituent le bloc BG. Ainsi, outre la liaison LB relative à l'alimentation électrique du bloc BG par le bloc BD contenant la batterie BA, la liaison entre les blocs BG et BD est complétée par une liaison LC entre des microcontrôleurs et une liaison audio LA entre des interfaces audio. Les liaisons LA, LB et LC sont composées respectivement de trois fils, quatre fils et cinq fils, chaque "fil" étant en pratique constitué par deux rubans conducteurs s'étendant respectivement dans les blocs et dont les extrémités viennent en contact lorsque le bloc BD est fixé par emboîtement dans la face arrière du bloc BG.

Chaque bloc BG, BD est organisé autour d'un microcontrôleur respectif CG, CD qui comprend classiquement un microprocesseur, une mémoire ROM et une mémoire RAM et qui gère des communications selon le premier mode GSM, respectivement le deuxième mode DECT comme dans un terminal radiotéléphonique de type GSM, respectivement de type DECT.

Chaque microcontrôleur CG, CD contrôle une **interface audio** AG, AD comprenant principalement un circuit de codage et décodage de parole et une interface radio RG, RD comprenant principalement un modulateur et un démodulateur, des convertisseurs analogique-numérique et numérique-analogique, des circuits de transposition de fréquence et un duplexeur de voies de transmission et de réception.

Les interfaces audio AG et AD sont reliées par la liaison LA comprenant un fil de masse M, un fil de transmission de signal audio analogique AUT et un fil de réception audio analogique AUR. Lorsque le terminal DMT est en mode de communication DECT, le fil AUT transmet un signal audio de l'usager du terminal depuis un microphone MI de l'interface AG vers l'interface AD, et le fil AUR reçoit un signal audio d'un interlocuteur distant depuis l'interface AD vers un écouteur EC relié à l'interface AG. En communication de type GSM, l'interface audio AG gère le volume et l'annulation d'écho et ignore l'interface AD. En communication de type DECT, l'interface audio AD gère les demandes de réglage de volume suite à des appuis de touches de clavier VM et VP et l'annulation d'écho par l'intermédiaire de paires de commande-réponse entre les microcontrôleurs CG et CD, comme si l'interface audio AD était reliée directement au microphone MI et à l'écouteur EC à travers l'interface audio AG devenue transparente.

Les interfaces radio RG et RD fonctionnent sous les commandes respectives du microcontrôleur CG et CD selon les protocoles de communication GSM et DECT et sont ainsi indépendantes.

Outre le microphone MI et l'écouteur EC, le premier bloc BG dédié aux communications selon le premier mode GSM met à la disposition du deuxième bloc BD une interface homme-machine comportant un afficheur à cristaux liquides AF, un clavier CL, un buzzer BU et une carte à puce personnelle SIM (Suscriber Identity Module). Le buzzer BU reproduit des mélodies de sonnerie notamment pour divers types d'appel. Les mélodies sont initialement choisies par l'usager et sont sélectionnées pour partie par le microcontrôleur CG pour des communications en mode GSM et pour partie par le microcontrôleur CD pour des communications en mode DECT. La carte SIM est amovible du bloc BG et contient principalement un microcontrôleur avec des algorithmes de communication et d'application spécifiques et le profil d'abonnement de l'usager propriétaire de la carte SIM. Les quatre éléments AF, CL, BU et SIM sont gérés par le microcontrôleur CG naturellement pour une communication de type GSM et indirectement depuis le microcontrôleur CD pour une communication de type DECT.

**L'afficheur AF** est relié au microcontrôleurs CG et CD à travers deux fils TX et RX pour échanger des commandes et réponses entre les microcontrôleurs, comme on le verra dans la suite. En particulier, le microcontrôleur CD gère des menus pour communication DECT visualisés sur l'afficheur AF avec des caractères acceptés par les commandes échangées entre la carte SIM et le microcontrôleur CG connues sous l'appellation SIM Application Toolkit. Les caractéristiques de l'afficheur AF sont échangées entre les microcontrôleurs CG et CD lors de l'initialisation du microcontrôleur CD par le microcontrôleur CG, à la mise sous tension du terminal DMT. Le microcontrôleur CD ne gère pas directement l'affichage graphique et tient compte des caractéristiques de l'afficheur AF pour centrer des messages sur l'écran de l'afficheur. Le microcontrôleur CD signale à la borne BR (base DECT) les caractéristiques de l'afficheur conformément au protocole de communication DECT. Le microcontrôleur CG relatif au mode de communication GSM gère les curseurs et les icônes ainsi que tout événement qui pourrait interrompre un affichage. Lorsque le terminal DMT est sous couverture d'une borne radio BR, le mode DECT ayant été sélectionné automatiquement ou manuellement, le microcontrôleur CD visualise sur l'afficheur AF à travers le microcontrôleur CG un identifiant, tel que nom, de la borne radio BR qu'a attribué l'usager du terminal DMT lorsque celui-ci s'est déclaré auprès de la borne BR selon une procédure connue pour le mode DECT. L'identifiant de la borne BR ainsi que l'identifiant, tel que nom, de l'opérateur du réseau de radiotéléphonie RR pour le mode GSM sont affichés au début d'un menu principal notamment après mise sous tension du terminal par sollicitation d'une touche de mise sous tension et composition d'un code confidentiel au clavier CL, ou après réveil du terminal, ou après retour au menu principal.

Outre l'afficheur AF sur la face avant du bloc BG du terminal DNT, celle-ci présente le **clavier de numérotation** classique à douze touches CL et plusieurs touches supplémentaires précisées ci-après, selon une réalisation connue d'un terminal radiotéléphonique mobile GSM. Les touches supplémentaires sont une touche de raccroché TR, par exemple rouge ; une touche de prise de ligne TP, par exemple verte ; une "touche centrale de navigation" comportant à gauche et à droite une touche d'effacement C (Clear), une touche de validation OK et des touches d'ascenseur avec flèche vers le haut FH et flèche vers le bas FB ; et deux touches de réglage du volume sonore de l'écouteur, une touche de diminution de volume VM et une touche d'augmentation de volume VP disposées dessous l'écran de l'afficheur AF et respectivement sensiblement au-dessus des touches TR et TP.

Le clavier CL et les touches supplémentaires sont utilisés de la même manière pour une communication en mode GSM comme dans un terminal GSM classique, et pour une communication en mode DECT comme dans un terminal classique DECT. Par exemple, pour un appel sortant, les touches du clavier CL servent à composer le numéro d'appel supposé à au plus N=1 chiffre pour un demandé ayant un terminal desservi par la borne radio BR et supposé comprendre au moins N+1 chiffres pour un demandé équipé d'un terminal téléphonique fixe ou d'un terminal radiotéléphonique mobile ayant généralement au moins dix chiffres, y compris pour une communication internationale. Toutefois, quel que soit le mode de communication, l'usager compose le numéro téléphonique du demandé avant d'appuyer sur la touche de prise de ligne TP, conformément à l'établissement d'un appel sortant en mode GSM, et à l'inverse d'un appel sortant en mode DECT. Ainsi, indépendamment du mode de communication sélectionné, la touche TP déclenche l'établissement d'une communication radio avec la station de base BTS auquel est rattaché le terminal DMT momentanément lorsque celui-ci fonctionne en mode GSM, ou une communication radio avec la borne BR dans-la couverture de laquelle le terminal DMT se trouve momentanément.

Deux touches supplémentaires TG et TD qui sont programmables selon l'invention et qui sont mises à la disposition d'un usager d'un terminal DECT apparaissent en bas de l'écran de l'afficheur AF en réponse à une sollicitation de la touche flèche vers le haut FH lorsqu'une communication en mode DECT est établie par le terminal DMT. Relativement à la première touche programmable TG visualisée par un logotype en bas de l'afficheur AF au-dessus de la touche VM, des appuis successifs sur les touches FH et VM sont équivalents à un appui sur la touche "rappel enregistreur" d'un terminal classique DECT. Relativement à la touche programmable de droite TD, des appuis successifs sur les touches FH et VP sont équivalents à une touche d'intercommunication dans un terminal classique DECT. Si l'usager continue à naviguer dans les menus, les deux touches programmables TG et TD disparaissent de l'afficheur AF lorsque l'usager appuie sur une autre touche, par exemple pour consulter un menu avec les touches FH et FB.

Le terminal DMT présente trois **configurations** possibles qui sont une configuration en mode DECT seulement, une configuration en mode GSM seulement, et une configuration bimode automatique. L'une de ces trois configurations est sélectionnée préalablement à toute communication dans un menu "REGLAGES/RESEAU" au moyen des touches FH, FB et OK. Si la configuration en mode DECT est sélectionnée, le terminal DMT fonctionne seulement en mode DECT et l'interface radio RG est coupée du réseau de radiotéléphonie RR et le terminal se comporte comme un terminal mobile de type DECT ; dans ce mode DECT, le terminal reçoit les appels entrants externes ou d'intercommunication en mode DECT et établit des appels sortants en mode DECT. Inversement, lorsque la configuration en mode GSM est sélectionnée, l'interface radio RD est coupée de la borne radio BR et le terminal DMT se comporte comme un terminal mobile de type GSM ; dans ce mode GSM, le terminal reçoit des appels entrants de trafic GSM ou de message court SMS et établit des appels sortants en mode GSM. En configuration bimode, le terminal DMT peut commuter automatiquement entre les modes GSM et DECT en raison d'une perte de couverture ou de service relative à l'un des deux modes de communication ; dans cette configuration bimode, le terminal DMT maintient sa localisation par rapport à la station de base BTS et la borne radio BR dans la mesure où il est sous la couverture de ceux-ci.

Le terme "coupée" attribué ci-dessus à une interface radio signifie que le moyen d'émission inclus dans cette interface n'émet pas, c'est-à-dire est hors tension, pour ne pas perturber le fonctionnement dû moyen de réception dans l'interface radio associée à l'autre mode de communication ; par exemple, lorsque le premier mode de communication est sélectionné pour établir une communication avec un réseau de radiotéléphonie DCS 1800, le moyen d'émission dans l'interface radio DECT RD dont la bande de fréquence d'émission est très proche de celle de la bande de fréquence du réseau DCS 1800 est coupé au moins pendant les communications en mode GSM. En variante, afin de diminuer la consommation électrique du terminal, l'interface radio correspondant au mode non sélectionné DECT ou GSM est entièrement coupée pendant une communication selon l'autre mode.

La **batterie** BA du terminal DMT incluse dans le bloc amovible BD est entièrement gérée par le microcontrôleur CG.

La liaison LB comprend d'une manière connue une paire de fils TP et TM reliés aux bornes d'une thermistance TH dans le bloc BD et une paire de fils BP et BM reliés aux bornes de la batterie BA dans le bloc BD pour alimenter les circuits dans le bloc BC. Le deuxième microcontrôleur CD ainsi que les interfaces AD et RD sont alimentés également par la batterie BA mais sous le contrôle du premier microcontrôleur CG comme expliqué plus loin.

La **liaison LC** entre les microcontrôleurs CG et CD comprend un premier fil, dit fil d'interruption INT, un deuxième fil, dit fil de sélection de deuxième contrôleur CS, un fil marche-arrêt de deuxième bloc ON, et deux fils de transmission et réception d'unité de données de protocole TX et RX. Les fils TX et RX sont des liens série asynchrones ayant un débit normalisé compris entre 4800 et 38400 bauds avec des octets représentatifs de caractères comportant un bit de stop, sans bit de parité. Les fils TX et RX respectivement pour des commandes COM et des réponses RES sont multiplexés avec des fils de données de l'afficheur AF. Le premier microcontrôleur CG transmet des unités de données de protocole applicatif APDU (Application Protocol Data Unit) de commande COM au deuxième microcontrôleur CD à travers le fil de transmission TX. Le deuxième microcontrôleur CD transmet des unités de données du protocole applicatif APDU de réponse RES au microcontrôleur CG à travers le fil de réception RX.

En variante, les deux fils de transmission de données TX et RX sont remplacés par un unique fil pour un échange d'unités de données à l'alternat (half-duplex) entre les microcontrôleurs.

Les séquences de commande-réponse sont des séquences d'unités de données selon le protocole de communication de l'invention analogues à celles du protocole de communication à l'alternat asynchrone caractère par caractère ou bloc de caractères par bloc de caractères, regroupées sous le terme de SIM Application Toolkit selon la norme pour carte à puce ISO 7816-3/4, c'est-à-dire selon le protocole d'échange entre le premier microcontrôleur CG et la carte SIM. Comme la carte SIM, le deuxième microcontrôleur CD est l'esclave du premier microcontrôleur CG, maître. Grâce aux paires de commande-réponse, le premier microcontrôleur CG met à la disposition du deuxième microcontrôleur CD les éléments AF, CL, SIM, BU, MI et EC comme si le deuxième microcontrôleur CD était relié directement à ces derniers, le premier microcontrôleur CG ignorant complètement les caractéristiques du protocole de communication selon le deuxième mode DECT.

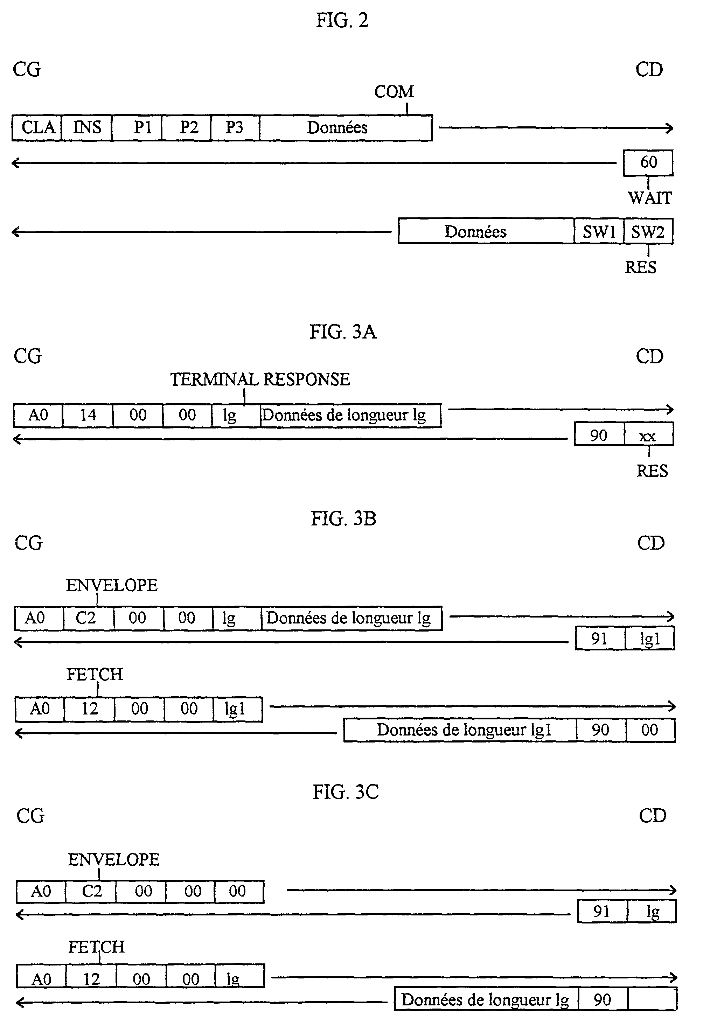

Comme montré à la figure 2, trois types d'unités de données de protocole applicatif APDU sont prévues selon l'invention : une commande COM avec un en-tête à cinq octets suivi ou non d'un champ de données, une réponse RES débutant éventuellement par un champ de données suivie de deux octets d'état SW1 et SW2, et une attente WAIT comprenant un seul octet '60'. Dans ce qui suit, les octets indiqués entre deux accents ou entre des crochets sont exprimés en code hexadécimal.

Dans l'en-tête d'une commande COM, le premier octet CLA désigne une classe de l'instruction contenue dans l'octet suivant, l'octet INS est un code d'instruction lié à une commande du système d'exploitation du deuxième microcontrôleur CD, et P1, P2 et P3 sont des paramètres relatifs à l'instruction. Les deux premiers paramètres P1 et P2 sont à '00'. Le paramètre P3 indique la longueur lg exprimée en octets du champ de données de la commande COM lorsque celui-ci existe. Toutefois, le paramètre P3 peut indiquer la longueur des données demandée par une réponse de type [91, lg1] pour des données à transmettre dans une prochaine réponse de type [90, 00].

Les figures 3A, 3B et 3C montrent les trois cas d'échanges possibles entre les microcontrôleurs CG et CD. La figure 3A est relative à une paire de commande-réponse sans que le microcontrôleur CD retransmette des données. La figure 3B est relative à la transmission de données du microcontrôleur CG vers le microcontrôleur CD avec transmission de données de longueur lg1 par le microcontrôleur CD. La figure 3C est relative à un envoi de données de longueur lg par le microcontrôleur CD vers le microcontrôleur CG à la suite d'une commande ENVELOPE vide de données avec la longueur nulle '00'.

Selon l'invention, l'octet de classe CLA est toujours égal à 'A0', et l'octet d'instruction INS a trois valeurs. La valeur '14' de l'octet INS désigne une instruction de type TERMINAL RESPONSE pour transmettre la réponse du microcontrôleur CG à l'autre microcontrôleur CD à la suite d'une commande pro-active contenue dans une réponse RES de type "commande DECT". La valeur '12' de l'octet INS désigne une instruction FETCH qui, à la suite d'une réponse de type [91, lg], invite le deuxième microcontrôleur CD à transférer une réponse RES avec un champ de données contenant une commande, par exemple relative à une sonnerie d'appel ou l'affichage d'un menu DECT. La valeur 'C2' de l'octet INS désigne une instruction ENVELOPE pour transférer des données du premier microcontrôleur CG vers le deuxième microcontrôleur CD lorsque le paramètre P3 est égal à la longueur lg du champ de données de la commande ENVELOPE comme montré à la figure 3B, ou pour permettre au deuxième microcontrôleur CD d'envoyer une demande de commande pro-active avec la réponse [91, lg] en liaison avec la mise à l'état logique "1" d'un fil d'interruption INT dans la liaison LC, comme on le verra par la suite, lorsque le paramètre P3 est égal à '00' comme montré à la figure 3C.

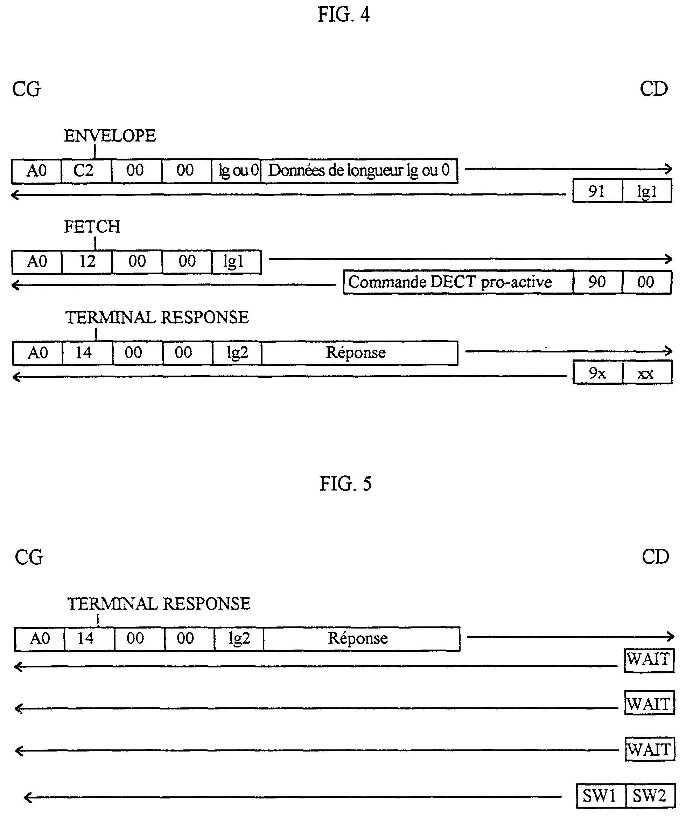

L'instruction ENVELOPE avec un champ de données ayant une longueur différente de 0 permet au microcontrôleur CG d'envoyer au microcontrôleur CD par exemple une "commande DECT", une "commande de contrôle d'appel" ou une "commande de test". L'instruction TERMINAL RESPONSE répond à une réponse contenant une commande DECT. Toute commande DECT incluse dans une réponse RES établie par le microcontrôleur CD résulte de l'échange montré à la figure 4 comprenant successivement une commande ENVELOPE de longueur lg ou 0, une réponse [91, lg1], une commande FETCH [lg1], une réponse de commande DECT pro-active [90, 00], une commande TERMINAL RESPONSE [lg2] et une réponse d'acquittement [9x, xx].

A la suite d'une commande COM, telle que ENVELOPE, FETCH, ou TERMINAL RESPONSE, le microcontrôleur CD dédié au mode de communication DECT a parfois besoin de beaucoup plus de temps qu'une durée d'attente maximale prédéterminée T2 = 35 ms pour répondre à la commande. Par exemple, dans un enchaînement de menus, le microcontrôleur CD consulte la borne radio BR par échange radio pour construire des menus. Pendant la durée des échanges entre la borne radio BR et le microcontrôleur CD, des unités de données de protocole applicatif WAIT sont transmises périodiquement toutes les T2 = 35 ms par le microcontrôleur CD afin de faire patienter le microcontrôleur CG. Dès réception d'une unité WAIT, le microcontrôleur CG redémarre un temporisateur de T3 = 40 ms. La réponse WAIT peut être utilisée par le microcontrôleur CD pendant au plus T4 = 300 ms. La figure 5 illustre un exemple de trois unités successives WAIT dans l'attente d'une réponse [SW1, SW2] à une commande TERMINAL RESPONSE.

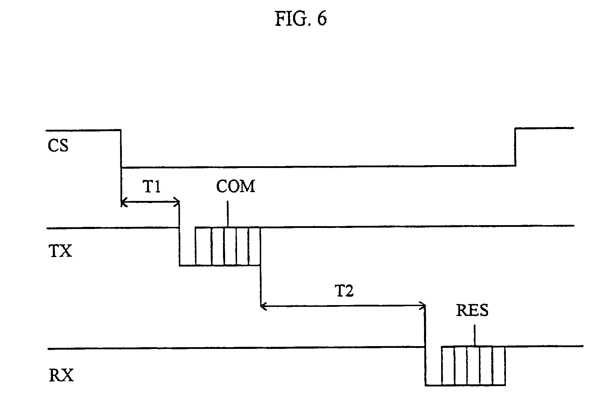

Le fil de sélection de deuxième microcontrôleur CS (Chip Select) dans la liaison LC entre microcontrôleurs a un premier état logique bas "0" maintenu par le microcontrôleur CG dédié aux communications DECT pendant chaque séquence d'émission/réception entre les deux microcontrôleurs CG et CD, c'est-à-dire pendant l'échange d'une commande COM et d'une réponse RES comme montré à la figure 6. Le fil CS est maintenu au deuxième état logique haut "1" par le microcontrôleur CG afin que tout échange entre les microcontrôleurs CG et CD soit interdit et le microcontrôleur CD soit en état de veille avec une consommation électrique réduite, le microcontrôleur CG pouvant alors dialoguer avec l'interface homme-machine relativement à des données excluant le mode DECT.

Avant la transmission d'une commande COM, le premier microcontrôleur CG positionne le deuxième fil CS à l'état "0" pendant un temps de garde T1 = 5 ms pour réveiller le microcontrôleur CD. Après l'émission de la commande COM à travers le fil TX, le microcontrôleur CG maintient l'état logique "0" du fil CS au maximum pendant une durée d'attente T2 = 35 ms qui succède à la transmission de la commande COM et avant l'expiration de laquelle le microcontrôleur CD doit émettre une réponse RES à travers le fil RX. Comme déjà dit, lorsque le microcontrôleur CD a besoin d'un temps de réponse supérieur à T2, il émet au moins une réponse WAIT à l'expiration de la durée T2, puis périodiquement toutes les T2 = 35 ms.

Après réception de la réponse RES, le microcontrôleur CG met à l'état "1" le fil CS si aucune autre commande COM n'est transmise à la suite de la réponse RES de manière à mettre en "sommeil" le microcontrôleur CD et ainsi à réduire la consommation d'énergie de celui-ci. Le passage de l'état "0" à l'état "1" du fil CS normalement après une réponse RES, ou par erreur au cours de l'échange d'une commande COM et d'une réponse RES provoque l'arrêt immédiat de la séquence commande/réponse et la remise à zéro des données en réception et émission dans le microcontrôleur CD.

Lorsque le microcontrôleur CG ne reçoit pas de réponse à l'expiration de la durée T2 (time-out), ou lorsque le microcontrôleur CG ne comprend pas la réponse RES qui lui a été envoyée, il arrête immédiatement l'échange en passant le fil CS de l'état "0" à l'état "1", puis bascule l'état du fil CS à "0" et ré-émet la commande COM sur le fil TX après un temps de garde T1. Cette ré-émission peut être lancée jusqu'à trois essais. Si ces trois essais échouent, le microcontrôleur CG abandonne l'échange. S'il s'agit d'une instruction ENVELOPE ou TERMINAL RESPONSE, le microcontrôleur CG indique à l'usager sur l'afficheur AF "bloc BD absent". Ce principe s'applique aux instructions ENVELOPE de longueur non nulle et aux instructions FETCH, mais pas aux instructions ENVELOPE de longueur nulle.

Le microcontrôleur CG numérote les commandes COM constituées d'une ENVELOPE de longueur non nulle. Deux commandes successives portent des numéros différents pour que le microcontrôleur CG différencie une commande nouvelle d'une commande répétée. Par conséquent, lorsque le microcontrôleur CD reçoit deux commandes successives contenant le même numéro, il ne tient pas compte de la deuxième commande et il répond par une réponse RES.

Au lieu que le premier microcontrôleur CG interroge périodiquement le deuxième microcontrôleur CD, comme l'interrogation périodique (polling) de la carte SIM par le microcontrôleur CD par une commande périodique STATUS, le deuxième microcontrôleur CD effectue un premier changement d'état logique du **fil d'interruption INT,** lorsque le microcontrôleur CD se réveille et a l'intention d'envoyer des données ou une commande pro-active au microcontrôleur CG ou d'interroger celui-ci.

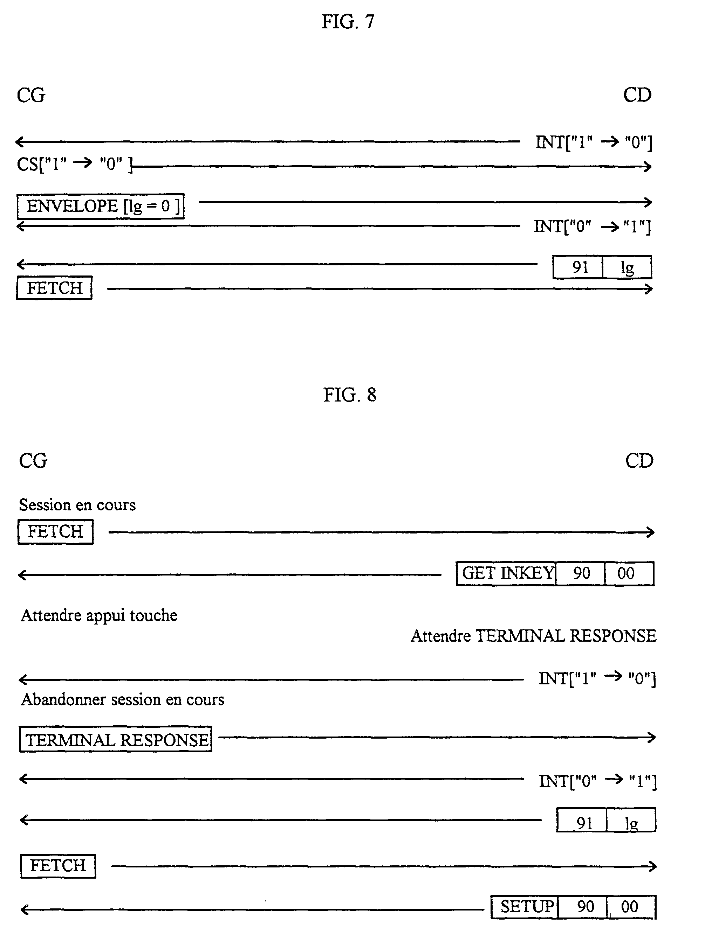

Les échanges suivants sont alors réalisés en référence à la figure 7. Le microcontrôleur CD effectue un premier changement de l'état logique haut "1" à l'état logique bas "0" du fil INT. Le premier microcontrôleur CG amorce alors le dialogue en mettant à "0" le fil de sélection CS, et après T1, en transmettant une enveloppe vide ENVELOPE [lg = 0]. En réponse à l'enveloppe vide, le microcontrôleur CD effectue un deuxième changement d'état du fil INT de l'état "0" à l'état "1". Le dialogue entre les microcontrôleurs CG et CD s'instaure normalement comme à la figure 3C, par l'émission d'une réponse [91, lg] par le microcontrôleur CD dans le fil RX, puis la transmission d'une commande FETCH dans le fil TX par le microcontrôleur CG, etc.

Lorsque le microcontrôleur CG est en état de veille lors de la mise à l'état "0" du fil INT par l'autre microcontrôleur CD, le microcontrôleur CG doit répondre de préférence en moins de T5 = 30 ms.

Si le signal CS ne s'abaisse pas de l'état "1" à l'état "0", alors que le fil INT a été positionné à l'état "0" depuis plus de T5 = 30 s, le microcontrôleur CD remonte l'état du fil INT à "1" ; la demande de transmission de commande pro-active par le microcontrôleur CD n'ayant pas été comprise par le microcontrôleur CG, le microcontrôleur CD relance une demande.

Si le signal CS s'abaisse de l'état "1" à l'état "0" alors que le fil INT a été positionné à l'état "0", et que ce signal remonte de l'état "0" à l'état "1" sans que le microcontrôleur CD n'ait compris la commande COM, le microcontrôleur CD remonte le signal INT de l'état "0" à l'état "1" et après une temporisation T6 = 10 ms, il refait une demande de transmission de commande en abaissant à nouveau le fil INT à l'état "0". Le microcontrôleur CD peut relancer cette demande trois fois consécutives. Si la troisième demande de commande ENVELOPPE de longueur nulle échoue, le microcontrôleur CD se réinitialise selon une première variante, ou abandonne la demande de commande en cours selon une deuxième variante, ou poursuit les tentatives de demande de commande selon une troisième variante.

Lorsque le deuxième microcontrôleur CD dédié aux communications DECT décide d'envoyer une nouvelle commande vers le microcontrôleur CG alors qu'une session de dialogue entre les microcontrôleurs comme celle montrée à la figure 7 est en cours, le microcontrôleur CD positionne le fil INT à l'état "0". Par exemple, comme montré à la figure 8, la demande de commande par le microcontrôleur CD intervient pendant le choix dans un menu relatif au mode DECT, après une commande FETCH, une réponse d'invitation à utiliser le clavier CL [GET INKEY, 90, 00], l'appui d'une touche au clavier CL et l'attente par le microcontrôleur CD tant que l'usager n'a pas choisi le menu. Si pendant cette période d'attente le microcontrôleur CD a reçu un appel entrant à travers la borne radio BR, le microcontrôleur CD met à "0" le fil INT ce qui entraîne l'abandon de la session (menu en cours) par le microcontrôleur CG qui revient au repos. Pour mettre fin au dialogue en' cours, le microcontrôleur CG transmet la commande TERMINAL RESPONSE au microcontrôleur CD avec le résultat "session abandonnée". Le microcontrôleur CD met alors à "1" le fil d'interruption INT et envoie une réponse [91, lg] afin de commencer une autre session spécifique à l'établissement de l'appel entrant. Cette session commence par une commande FETCH transmise par le microcontrôleur CG et ensuite une réponse d'établissement d'appel entrant [SETUP, 90, 00] de manière à déclencher le buzzer BU par un signal de sonnerie.

Comme déjà dit, le terminal DMT peut fonctionner exclusivement en mode GSM ou en mode DECT, en interdisant toute communication à travers l'interface relative à l'autre mode de communication afin d'éviter toute perturbation mutuelle entre les interfaces radio RG et RD dans le terminal DMT. Lors d'une communication en mode GSM, grâce à une commande RADIO STATUS, le microcontrôleur CG réclame une exclusivité radio au microcontrôleur CD. Si un lien radio est en cours, le microcontrôleur CD a besoin de T3 = 30 ms pour signaler la libération de la liaison radio en mode DECT à la borne radio BR. Pendant toute cette phase d'exclusion, l'interface radio RD n'émet pas sur ses canaux radio. Par contre, le moyen de réception dans l'interface radio RD continue à suivre la borne BR. Lorsque le microcontrôleur CG n'a plus besoin d'une exclusivité, suite à la fin d'une communication GSM, il met fin à celle-ci par une commande RADIO STATUS.

Réciproquement, en réponse à un message d'établissement d'appel entrant ou sortant en mode DECT de type SETUP transmis par le microcontrôleur CD, le microcontrôleur CG passe en exclusivité radio en mode DECT.

Sur la face avant du bloc BG, la touche de prise de ligne TP qui sert également de touche Bis pour rappel du dernier numéro téléphonique et de touche d'écoute amplifiée est également sollicitée pour mettre en marche le terminal, c'est-à-dire pour mettre sous tension de la batterie incluse dans le bloc amovible BD, les circuits électroniques du terminal, tels que les microcontrôleurs CG et CD. De même, la touche de raccroché TR sert également de touche d'arrêt pour mettre hors tension les circuits électroniques dans les blocs BG et BD du terminal lorsque celui-ci n'est plus en communication.

De préférence, le troisième **fil ON** dans la liaison LC entre les microcontrôleurs CG et CD sert également à commander l'arrêt, c'est-à-dire à mettre hors tension, et à mettre en marche, c'est-à-dire à mettre sous tension, du deuxième bloc BD par le microcontrôleur CG. En particulier, l'arrêt du bloc BD pendant que le terminal DMT est en mode GSM réduit la consommation électrique du terminal DMT.

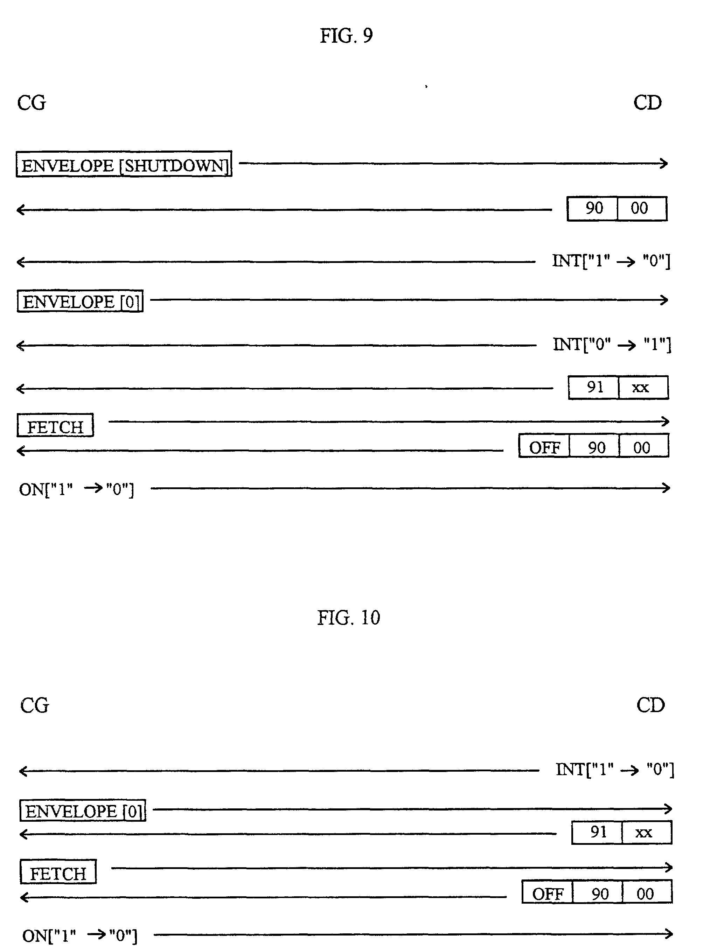

Lorsque le microcontrôleur CG souhaite l'exclusivité radio pour une communication en mode GSM comme montré à la figure 9, il envoie une enveloppe avec une instruction d'arrêt [SHUTDOWN] au microcontrôleur CD qui établit une réponse [90, 00] à la suite de laquelle, le microcontrôleur CD lance l'arrêt de toutes les applications et les communications radio en cours. Lorsque le microcontrôleur CD est prêt, il envoie au microcontrôleur CG une demande d'arrêt selon la séquence décrite ci-après en référence à la figure 10, à la suite de laquelle le microcontrôleur CG met à l'état logique bas "0" le fil ON pour couper l'alimentation principalement du microcontrôleur CD par la batterie BA. Lorsque le microcontrôleur CD souhaite lui-même être désalimenté par exemple à la suite d'un basculement manuel en mode GSM, un échange selon l'invention s'instaure comme montré à la figure 10, avec une commande ENVELOPE de longueur nulle, une réponse [91, xx], une commande FETCH, et une réponse de commande DECT d'arrêt [OFF, 90, 00] afin que le microcontrôleur CD demande au microcontrôleur CG de mettre hors de tension de batterie le bloc BD en mettant à "0" le fil ON. Cette mise à zéro du fil ON du bloc BD par le microcontrôleur CG pour couper l'alimentation du bloc BD peut précéder. l'émission d'une commande TERMINAL RESPONSE qui est ignorée par le microcontrôleur CD.

A la remise sous tension de batterie du microcontrôleur CD, le terminal redémarre en bimode automatique. Si le terminal DMT est dans un autre mode que le mode DECT, le microcontrôleur CG l'indique au microcontrôleur CD après que le microcontrôleur CD soit de nouveau mis sous tension par passage du fil ON de l'état "0" à l'état "1" par le microcontrôleur CG suivi par une procédure d'échange analogue à celui de la figure 9, en remplaçant la réponse OFF par une réponse ON comme montré à la figure 10. Puis, le microcontrôleur CG peut envoyer une commande COM [SELECT] pour qualifier au microcontrôleur CD la borne radio qui était en liaison radio avec l'interface RD.

## Revendications

1. Procédé de dialogue selon lequel un premier contrôleur transmet des premières unités de données (COM) auxquelles un deuxième contrôleur répond par des deuxièmes unités de données (RES), **caractérisé par** un premier changement d'état logique d'un premier fil (INT) entre les contrôleurs effectué par le deuxième contrôleur (CD) lorsque celui-ci décide d'envoyer une commande au premier contrôleur (CG), une transmission d'une première unité de données prédéterminée (ENVELOPE) par le premier contrôleur à la suite du premier changement d'état, et un deuxième changement d'état logique du premier fil opposé au premier changement et la transmission d'une deuxième unité de données effectués par le deuxième contrôleur pour répondre à la première unité de données prédéterminée.

2. Procédé conforme à la revendication 1, selon lequel la première unité de données prédéterminée est une enveloppe contenant un champ de données vide.

3. Procédé conforme à la revendication 1 ou 2, selon lequel toute première unité de données transmise par le premier contrôleur (CG) entre des premier et deuxième changements d'état du premier fil (INT) est ignorée par le deuxième contrôleur (CD) lorsque celui-ci décide d'envoyer une commande au premier contrôleur (CG) alors qu'une session de dialogue est en cours entre les contrôleurs.

4. Procédé conforme à l'une quelconque des revendications 1 à 3, **caractérisé par** un maintien d'un premier état logique d'un deuxième fil (CS) entre les contrôleurs par le premier contrôleur (CG) seulement pendant chaque échange de première et deuxième unités de données (COM, RES).

5. Procédé conforme à la revendication 4, selon lequel le premier contrôleur (CG) positionne le deuxième fil (CS) au premier état logique pendant un temps de garde (T1) précédant la transmission de la première unité de données (COM) de l'échange pour réveiller le deuxième contrôleur (CD).

6. Procédé conforme à la revendication 4 ou 5, selon lequel le premier contrôleur (CG) maintient le deuxième fil (CS) au premier état au maximum pendant une durée d'attente (T2) succédant à la transmission de la première unité de données (COM) de l'échange, ladite durée d'attente étant de préférence la période entre des unités d'attente (WAIT) transmises par le deuxième contrôleur au premier contrôleur en attente d'une deuxième unité de données (RES).

7. Procédé conforme à l'une quelconque des revendications 4 à 6, **caractérisé par** un arrêt d'une séquence première/deuxième unités de données (COM, RES) et une remise à zéro des données en réception et émission dans le deuxième contrôleur (CD) provoqués par le passage du premier état logique à un deuxième état logique du deuxième fil (CS) par le premier contrôleur (CG).

8. Procédé conforme à l'une quelconque des revendications 1 à 7, **caractérisé par** un maintien d'un troisième fil (ON) entre les contrôleurs à un premier état logique par le premier contrôleur (CG) pour mettre hors tension le deuxième contrôleur (CD) à la suite d'une première unité de données prédéterminée (ENVELOPE[SHUTDOWN]) établie par le premier contrôleur, et/ou en réponse à une deuxième unité de données prédéterminée (OFF) établie par le deuxième contrôleur (CD).

9. Terminal radiotéléphonique (DMT) **caractérisé en ce qu'**il comprend des premier et deuxième contrôleurs (CG, CD) adaptés à échanger des premières et deuxièmes unités de données de protocole (COM, RES) selon le procédé de dialogue conforme à l'une quelconque des revendications 1 à 8 et dédiés respectivement à des premier et deuxième modes de communication afin que le premier contrôleur (CG) mette à disposition du deuxième contrôleur une interface homme-machine (AF, CL, MI, EC, BU, SIM).

10. Terminal conforme à la revendication 9, **caractérisé en ce que** le premier contrôleur (CG) et l'interface homme-machine (AF, CL, MI, EC, BU, SIM) sont contenus dans un premier bloc (BG), et le deuxième contrôleur (CD) et un moyen d'alimentation électrique (BA) des contrôleurs sont contenus dans un deuxième bloc (BD) emboîtable dans le premier bloc.

11. Terminal conforme à la revendication 9 ou 10, comprenant des première et deuxième interfaces audio (AG, AD) fonctionnant sous les commandes respectives des premier et deuxième contrôleurs (CG, CD) et reliées entre elles afin que la deuxième interface (AD) soit reliée à un microphone (MI) et un écouteur (EC) à travers la première interface (AG) lorsque le terminal est au deuxième mode de communication.

## Patentansprüche

1. Dialogverfahren, in dem eine erste Steuereinheit erste Dateneinheiten (COM) übermittelt, auf die eine zweite Steuereinheit mit zweiten Dateneinheiten antwortet (RES), **gekennzeichnet durch** eine erste Änderung des logischen Zustandes einer ersten Verbindung (INT) zwischen den Steuereinheiten, die von der zweiten Steuereinheit (CD) vorgenommen wird, wenn diese entscheidet, der ersten Steuereinheit (CG) eine Anweisung zu senden, die Übertragung einer ersten festgelegten Dateneinheit (ENVELOPE) **durch** die erste Steuereinheit infolge der ersten Zustandsänderung, und eine zweite, der ersten Änderung entgegengesetzte Änderung des logischen Zustandes der ersten Verbindung und die Übertragung einer zweiten Dateneinheit **durch** die zweite Steuereinheit, um auf die erste festgelegte Dateneinheit zu antworten.

2. Verfahren nach Patentanspruch 1, nach dem die erste festgelegte Dateneinheit ein Envelope mit einem leeren Datenfeld ist.

3. Verfahren nach Patentanspruch 1 oder 2, nach dem jede erste von der ersten Steuereinheit (CG) zwischen der ersten und der zweiten Zustandsänderung der ersten Verbindung (INT) übertragene Dateneinheit von der zweiten Steuereinheit (CD) nicht beachtet wird, wenn diese entscheidet, der ersten Steuereinheit (CG) eine Anweisung zu senden, während ein Dialog zwischen den Steuereinheiten stattfindet.

4. Verfahren nach irgendeinem der Patentansprüche 1 bis 3, **gekennzeichnet durch** Aufrechterhaltung eines ersten logischen Zustandes einer zweiten Verbindung (CS) zwischen den Steuereinheiten **durch** die erste Steuereinheit (CG) nur während jedes Austausches einer ersten und zweiten Dateneinheit (COM, RES).

5. Verfahren nach Patentanspruch 4, nach dem die erste Steuereinheit (CG) die zweite Verbindung (CS) während einer Haltezeit (T1) vor Übertragung der ersten Dateneinheit (COM) des Austausches in den ersten logischen Zustand setzt, um die zweite Steuereinheit (CD) zu aktivieren.

6. Verfahren nach Patentanspruch 4 oder 5, nach dem die erste Steuereinheit (CG) die zweite Verbindung (CS) höchstens während einer Wartezeit (T2) nach Übertragung der ersten Dateneinheit (COM) des Austausches im ersten Zustand hält, wobei die genannte Wartezeit vorzugsweise die Dauer zwischen Warteeinheiten (WAIT) ist, die der ersten Steuereinheit von der zweiten Steuereinheit in Erwartung einer zweiten Dateneinheit (RES) gesandt werden.

7. Verfahren nach irgendeinem der Patentansprüche 4 bis 6, **gekennzeichnet durch** den Abbruch einer Folge von erster/zweiter Dateneinheit (COM/RES) und die Nullstellung der Empfangs- und Sendedaten in der zweiten Steuereinheit (CD), bewirkt von der ersten Steuereinheit (CG) **durch** den Wechsel der zweiten Verbindung (CS) vom ersten logischen Zustand in einen zweiten logischen Zustand.

8. Verfahren nach irgendeinem der Patentansprüche 1 bis 7, **gekennzeichnet durch** das Halten einer dritten Verbindung (ON) zwischen den Steuereinheiten **durch** die erste Steuereinheit (CG) in einem ersten logischen Zustand, um die zweite Steuereinheit (CD) infolge einer festgelegten ersten Dateneinheit (ENVELOPE [SHUTDOWN]) abzuschalten, die von der ersten Steuereinheit erstellt wird, und/oder in Reaktion auf eine zweite festgelegte Dateneinheit (OFF), die von der zweiten Steuereinheit (CD) erstellt wird.

9. Funktelephonieendeinrichtung (DMT), **dadurch gekennzeichnet, dass** sie erste und zweite Steuereinheiten (CG, CD) umfasst, die dafür eingerichtet sind, erste und zweite Protokolldateneinheiten (COM, RES) nach dem Dialogverfahren nach irgendeinem der Patentansprüche 1 bis 8 auszutauschen, und die für einen ersten bzw. einen zweiten Kommunikationsmodus bestimmt sind, damit die erste Steuereinheit (CG) der zweiten Steuereinheit eine Mensch-Maschine-Schnittstelle (AF, CL, MI, EC, BU, SIM) zur Verfügung stellt.

10. Endeinrichtung nach Patentanspruch 9, **dadurch gekennzeichnet, dass** die erste Steuereinheit (CG) und die Mensch-Maschine-Schnittstelle (AF, CL, MI, EC, BU, SIM) in einem ersten Block (BG) enthalten sind und die zweite Steuereinheit (CD) und ein Stromversorgungsmittel (BA) für die Steuereinheiten in einem zweiten Block (BD) enthalten sind, der in den ersten Block eingesetzt werden kann.

11. Endeinrichtung nach Patentanspruch 9 oder 10, erste und zweite Audio-Schnittstellen (AG, AD) umfassend, die unter Anweisung der ersten (CG) bzw. der zweiten Steuereinheit (CD) arbeiten und miteinander verbunden sind, damit die zweite Schnittstelle (AD) durch die erste Schnittstelle (AG) hindurch mit einem Mikrophon (MI) und einem Hörer (EC) verbunden ist, wenn die Endeinrichtung sich im zweiten Kommunikationsmodus befindet.

## Claims

1. Dialogue process in which a first controller transmits first data units (COM) to which a second controller responds with second data units (RES), **characterised by** a first change of logic state of a first leg (INT) between the controllers carried out by the second controller (CD) when the latter decides to send a command to the first controller (CG), a transmission of a predetermined first data unit (ENVELOPE) by the first controller following the first change of state, and a second change of logic state of the first leg opposite to the first change and the transmission of a second data unit carried out by the second controller in order to respond to the predetermined first data unit.

2. Process according to claim 1, wherein the predetermined first data unit is an envelope containing an empty data field.

3. Process according to claim 1 or 2, wherein every first data unit transmitted by the first controller (CG) between the first and second changes of state of the first leg (INT) is ignored by the second controller (CD) when the latter decides to send a command to the first controller (CG) while a dialogue session is in progress between the controllers.

4. Process according to one of claims 1 to 3, **characterised in that** a first logic state of a second leg (CS) between the controllers is maintained by the first controller (CG) only during each exchange of first and second data units (COM, RES).

5. Process according to claim 4, wherein the first controller (CG) positions the second leg (CS) in the first logic state during a guard time (T1) preceding the transmission of the first data unit (COM) of the exchange in order to activate the second controller (CD).

6. Process according to claim 4 or 5, wherein the first controller (CG) maintains the second leg (CS) in the first state for at most a waiting period (T2) following the transmission of the first data unit (COM) of the exchange, said waiting period preferably being the period between the waiting units (WATT) transmitted by the second controller to the first controller while waiting for a second data unit (RES).

7. Process according to one of claims 4 to 6, **characterised by** the stoppage of a sequence of first/second data units (COM, RES) and resetting to zero of the data received and transmitted by the second controller (CD) caused by the change from the first logic state to a second logic state of the second leg (CS) by the first controller (CG).

8. Process according to any one of claims 1 to 7, **characterised by** the maintenance of a third leg (ON) between the controllers in a first logic state by the first controller (CG) in order to shut off the voltage to the second controller (CD) following a predetermined first data unit (ENVELOPE [SHUTDOWN]) established by the first controller, and/or in response to a predetermined second data unit (OFF) established by the second controller (CD).

9. Radiotelephone terminal (DMT), **characterised in that** it comprises first and second controllers (CG, CD) adapted to exchange first and second protocol data units (COM, RES) in the dialogue process according to any one of claims 1 to 8 and dedicated to first and second modes of communication, respectively, so that the first controller (CG) provides the second controller with a man-machine interface (AF, CI, MI, EC, BU, SIM).

10. Terminal according to claim 9, **characterised in that** the first controller (CG) and the man-machine interface (AF, CL, MI, EC, BU, SIM) are contained in a first block (BG), and the second controller (CD) and an electricity supply means (BA) to the controllers are contained in a second block (BD) which can be fitted into the first block.

11. Terminal according to claim 9 or 10, comprising first and second audio interfaces (AG, AD) operating under the control of the first and second controllers (CG, CD), respectively, and connected to one another so that the second interface (AD) is connected to a microphone (MI) and a receiver (EC) through the first interface (AG) when the terminal is in the second communication mode.
